# EUROPEAN PATENT SPECIFICATION

(11) **EP 4 542 505 B1**
(45) Date of publication and mention of the grant of the patent: **09.12.2026**
(21) Application number: 24206891.4
(22) Date of filing: 16.10.2024
(51) Int. Cl.: G06V 10/764, G06V 10/82, G06V 30/18, G06V 30/19, G06V 30/413, G06V 30/418, G06V 30/242, G06F 16/583, G06F 40/279, G06V 30/42

(54) **PLACEHOLDER IMAGE IDENTIFICATION**
PLATZHALTERBILDIDENTIFIKATION
IDENTIFICATION D'IMAGE DE DÉTENTEUR DE PLACE

(30) Priority: 20.10.2023 US 202318491063
(43) Date of publication of application: 23.04.2025
(73) Proprietor: Rakuten Group, Inc., Setagaya-ku Tokyo 158-0094 (JP)
(72) Inventor: WU, Enyuan, Tokyo, 158-0094 (JP); BERNARDO, Luis, Tokyo, 158-0094 (JP)
(74) Representative: Hoffmann Eitle

(56) References cited:
- US-A1- 2016 217 157
- US-A1- 2020 311 467
- US-A1- 2021 012 145
- US-A1- 2021 248 446
- DAUPHINEE T ET AL: "Modular Multimodal Architecture for Document Classification", ARXIV.ORG, 9 December 2019 (2019-12-09), pages 1 - 6, XP093250447, Retrieved from the Internet <URL:https://arxiv.org/abs/1912.04376> [retrieved on 20250211], DOI: https://doi.org/10.48550/arXiv.1912.04376
- BAKKALI SOUHAIL ET AL: "Visual and Textual Deep Feature Fusion for Document Image Classification", 2020 IEEE/CVF CONFERENCE ON COMPUTER VISION AND PATTERN RECOGNITION WORKSHOPS (CVPRW), IEEE, 14 June 2020 (2020-06-14), pages 2394 - 2403, XP033799037, DOI: 10.1109/CVPRW50498.2020.00289
- NICOLAS AUDEBERT ET AL: "Multimodal deep networks for text and image-based document classification", ARXIV.ORG, CORNELL UNIVERSITY LIBRARY, 201 OLIN LIBRARY CORNELL UNIVERSITY ITHACA, NY 14853, 15 July 2019 (2019-07-15), XP081441994

## Description

### CROSS-REFERENCE TO RELATED APPLICATIONS

Not Applicable

### STATEMENT RE: FEDERALLY SPONSORED RESEARCH/DEVELOPMENT

Not Applicable

### BACKGROUND

### 1. Technical Field

The present disclosure relates generally to image and text processing, and more particularly, to placeholder image identification.

### 2. Related Art

Online shopping, which is generally understood to encompass any consumer purchasing of goods and services over the Internet, continues to grow in popularity in part because of the convenience, product selection, and pricing advantages over conventional physical retailers. With web browsers and retailer-specific applications that available on smartphones, tablets, and other mobile devices, a purchase can be made almost anywhere and at any time. Payments are handled electronically and nearly instantaneously via any number of payment modalities such as credit cards, debit cards, gift cards, and even cryptocurrency, and products can also be delivered directly to the consumer's home by various package carrier services.

Importantly, sellers are able to provide a greater depth of information to the consumer to better assist in the purchase decision-making process. Such information includes marketing materials from the manufacturer or a reseller in the form of text, images, videos, and other multimedia content such as three-dimensional product models viewable through an augmented reality interface. Additionally, supplemental documentation such as instruction manuals, manufacturer frequently asked questions may be posted. Ratings and reviews from other consumers may also be presented.

There are a wide range of market segments and corresponding sellers that cater to each such segment. As such, there are variations in the arrangement of business processes and online storefronts among these sellers. For instance, small-scale retailers may sell products only within a certain niche though have sufficient sales volume to justify a dedicated storefront. There may also be others with a larger commercial presence spanning more products. For these retailers, the management of the storefront site may be handled internally, and sufficient resources are typically dedicated towards the maintenance and updating of all online catalog content as there is a direct relationship between sales volume/revenue and the usability, usefulness, and attractiveness of the website. These sites may utilize an existing e-commerce platform such as Shopify, Squarespace, and the like that provide foundational e-commerce features such as product cataloging, searching, shopping cart, and payment processing, among others.

There is still another type of online retailer that is also of relatively small operational scale, but by utilizing an online marketplace, can reach a wider customer base. Rakuten is one well-known marketplace, as are Amazon, Walmart, Target, and others. Although the specific nomenclature may vary depending on the marketplace, the foundational concepts are similar. Various third-party resellers maintain listings of products they wish to sell on the marketplace site, and customers can search for products to be purchased. There may be one or more resellers for the same product, and once a desired product is selected, the customer is able to select one depending on price, shipping cost, timing, seller rating, and so forth. The marketplace forwards the purchase transaction to the third-party reseller, which then fulfills the order and ships the product to the purchaser.

Although the product catalog appears to be that of the online marketplace site because its adherence to the graphic design standards thereof, the informational content on a catalog page for a given product may be the responsibility of the third-party reseller offering the product. Accordingly, the third-party seller may be tasked to provide the descriptive copy, various product images, and other multimedia content. Yet, third-party resellers may have limited personnel and resources to handle the updating of copy and may not have access to the high-resolution images showing multiple views of the product. Capturing and editing these product images can be a time-consuming task that such businesses are ill-equipped to handle. Presenting high quality product images is an essential part of successfully selling online, as such images are oftentimes the only or at least the primary basis upon which a customer makes a purchasing decision. In view of this importance, the marketplace site administration interface may require the upload of one or more product images before a catalog listing can be generated. Faced with a delay in commencing sales until quality images can be obtained, a third-party reseller may opt to upload placeholder images.

A placeholder image is understood to encompass any image that does not precisely reflect the product associated therewith. It may include imagery of an object or objects that generally relate to the product in question, for example, an image of a hammer, screwdriver, and pliers as a placeholder for a specific manual tool. The image may also include cautionary text indicating that it is a stock image that does not correspond to the actual product, or that an image for the product is "coming soon". The image may include text that explicitly states that the image is a placeholder.

Regardless of its design and visual conformance to the other design elements of the website, placeholder images detract from the marketplace experience and hinder the purchase decision-making process. This leads to decreased sales and hence revenues for the both the marketplace site as well as the third-party resellers in the long term, notwithstanding the short-term boost in sales to the reseller due to the immediate availability of a product listing and the generally wider reach of the marketplace site. Although the negative impact of placeholder images has been considered in the context of third-party resellers uploading to marketplace sites, similar issues may be encountered in retailer-operated online stores/websites. Nevertheless, the need to identify and remove placeholder images is particularly acute for marketplace sites due to the high volume and number of variations found across a typical catalog thereof.

There is accordingly a need in the art for detecting placeholder images. One known approach separates placeholder images into two broad categories: those that have already been seen in a product catalog, e.g., known placeholders, and those that have not been previously seen, e.g., new placeholders. For known placeholder images, one of several known hashing algorithms are applied to find others that have the same hash value. For unknown placeholder images, a machine learning model was used to determine if an input image is a placeholder. This involved three steps: first, for each product category, preparing ten images for analysis, second, comparing the input image with all ten images for the product category, and third, if five of the ten product images are different from the product image, then the input image is determined to be a placeholder.

Another known approach for placeholder image detection is part of a broader process for selecting optimal images for an online catalog. Unlike the previously mentioned placeholder detection method, there is no division between known and new placeholders. Instead, a binary image classifier is utilized to detect placeholder images. The model is understood to be trained from a publicly available training data set and built from an existing model. The model is then iteratively fine-tuned with manually-prepared product images. Additionally, the prior art "Modular Multimodal Architecture for Document Classification", 2019 of Dauphinee et al.; US 2016/217157 A1; "Visual and Textual Deep Feature Fusion for Document Image Classification", 2020 of Bakkali et al.; "Multimodal deep networks for text and image-based document classification", 2019 of Audebert et al.; US 2021/248446 A1; US 2021/012145 A1 and US 2020/311467 A1 teaches relevant background in the area of cross-modal document image classification.

The existing methods for detecting placeholder images still remain inaccurate, and the machine learning-based techniques involve complex training procedures and extensive data sets. Accordingly, there is a need in the art for more accurate and scalable placeholder image detection system.

### BRIEF SUMMARY

Placeholder images are those with no meaningful content, and are intended to be replaced with actual product images when available. It is desirable to flag an image if it is a placeholder, as it may improve customer experience and revenue of e-commerce sites. Additionally, improvements in machine learning model accuracy that depend on accurate product images are envisioned. An accurate and scalable process for placeholder image detection is contemplated in accordance with various embodiments of the present disclosure. Generally, placeholder images can be categories as either those that are visually similar to known placeholder images or those images containing some text indicating that it is a placeholder image.

The object of the invention is achieved by the subject-matter of the independent claims. Advantageous embodiments are defined in the dependent claims. Further examples are provided for facilitating the understanding of the invention. The present disclosure envisions to use of image vectorizing with one type of machine learning model and vector comparison techniques to match input images, in cases where the input image is visually similar to known examples. For those that include text tending to indicate a placeholder image, the text is extracted from the image using optical character recognition (OCR), and each word in the extracted text is compared against words in a pool of known placeholder phrases/sentences to find a total match count or score, and the spread of the matches. For the best matched phrases that are above a predefined score threshold, a further evaluation of the spread of matches is made to ensure that it is at most a predefined length. An evaluation of out-of-order word count is also evaluated to ensure it is within a predefined value. Feedback loops may be implemented to incorporate newly identified placeholder images into the known placeholder image pool and expand the capabilities of the image matching-based aspect of the process. The workflow of processing the images may be made more efficient with a caching layer. Overall, the embodiments of the placeholder image detection system may achieve accuracy of approximately 95%.

According to one embodiment of the present disclosure, a method for identifying an input image as a placeholder includes evaluating a match of the input image to a set of known placeholder images. The method may also include extracting a set of text characters from the input image in response to no match being evaluated for the input image. There may also be a step of tokenizing the set of text characters into constituent input image words of one or more phrases. The method may include generating a placeholder text match score from the input image words evaluated against a placeholder text wordlist of known placeholder phrases. Each of the placeholder phrases may include one or more known placeholder words. There may also be a step of flagging the input image as a placeholder based at least partially upon the placeholder text match score. The foregoing method may be implemented as a series of machine-readable instructions executed by a computer system, with such instructions being tangibly embodied in non-transitory program storage medium.

Another embodiment of the present disclosure may be a system for identifying a placeholder image in a catalog. The system may include an image comparator that is receptive to an input image. A placeholder image match score may be generated from the input image by the image comparator. The system may also include an optical character recognition engine that is receptive to the input image. The OCR engine, in turn, may output a set of text characters from the input image. The set of text characters may be sequenced as constituent input image words of one or more phrases. There may also be a word tokenizer that groups the set of text character into the input image words of the one or more phrases. The system may further include a placeholder text wordlist database with one or more known placeholder phrases. Each of the known placeholder phrases may include one or more known placeholder words. There may also be a text comparator that is connected to the placeholder text wordlist database. The text comparator may also be receptive to the input image words. A placeholder text match score may be generated by the text comparator from an evaluation of the input image words against the placeholder text wordlist database. A placeholder image identification may be made based at least partially on the placeholder text match score.

### BRIEF DESCRIPTION OF THE DRAWINGS

These and other features and advantages of the various embodiments disclosed herein will be better understood with respect to the following description and drawings, in which like numbers refer to like parts throughout, and in which:
FIGS. 1A-1C are exemplary placeholder images of corporate brands that may be displayed on an e-commerce platform site;
FIG. 2A-2B are exemplary broken images that may be displayed on the e-commerce platform site;
FIGS. 3A-3B are exemplary blank images that may be displayed as placeholders on the e-commerce platform site;
FIGS. 4A-4D are exemplary placeholder images without text content that may be displayed on the e-commerce platform site;
FIGS. 5A-5G are exemplary placeholder images with text content that may be displayed on the e-commerce platform site;
FIGS. 6A-6E are exemplary product images with text content that may be confused for a placeholder;
FIG. 7A-7E are exemplary placeholder images that include graphical content that may confusingly appear to be that of a non-placeholder but include text content indicating a placeholder;
FIG. 8 is a block diagram broadly illustrating the components of an exemplary e-commerce platform with which embodiments of the contemplated placeholder image identification system of the present disclosure may be utilized;
FIG. 9 is a flow diagram of an exemplary embodiment of a placeholder image detection process;
FIG. 10 is a block diagram for one embodiment of a placeholder image detection system in accordance with the present disclosure;
FIG. 11 is a flowchart showing an embodiment of a method of identifying an input image as a placeholder;
FIG. 12A depicts a set of individual Latin alphabet characters recognized by an optical character recognition engine;
FIG. 12B is a representation of words tokenized from a phrase comprised of a series of individual Latin alphabet characters;
FIG. 13A depicts a set of individual Japanese kanji characters recognized by the optical character recognition engine;
FIG. 13B is a representation of words tokenized from a phrase comprised of a series of individual Japanese kanji characters; and
FIG. 14 is a flowchart illustrating a caching layer that is implemented in connection with the placeholder image detection process.

### DETAILED DESCRIPTION

The present disclosure is directed to various embodiments of methods and systems for identifying placeholder images. The detailed description set forth below in connection with the appended drawings is intended as a description of the several presently contemplated embodiments and is not intended to represent the only form in which such embodiments may be developed or utilized. The description sets forth the functions and features in connection with the illustrated embodiments. It is to be understood, however, that the same or equivalent functions may be accomplished by different embodiments that are also intended to be encompassed within the scope of the present disclosure. It is further understood that the use of relational terms such as first and second and the like are used solely to distinguish one from another entity without necessarily requiring or implying any actual such relationship or order between such entities.

Placeholder images may be displayed or used in various information presentation contexts, though are typically encountered in the context of online e-commerce platforms or websites with catalogs of goods and services offered for purchase. The available inventory of products cataloged on the site may be grouped by category or viewed through a search query, with additional details being provided in a corresponding catalog page for the selected product. The catalog entries may be populated with informational text and images concerning the product. As discussed earlier, such text and image data may be managed by personnel of the e-commerce site owner, by third-party resellers of the product that is utilizing the e-commerce site as a selling platform, by the manufacturer or the distributor, or any other party along the supply chain. On occasion, the images for a product may not be available for one reason or another, and so a placeholder image may be substituted for when the catalog page or a preview thereof is presented to a visiting customer.

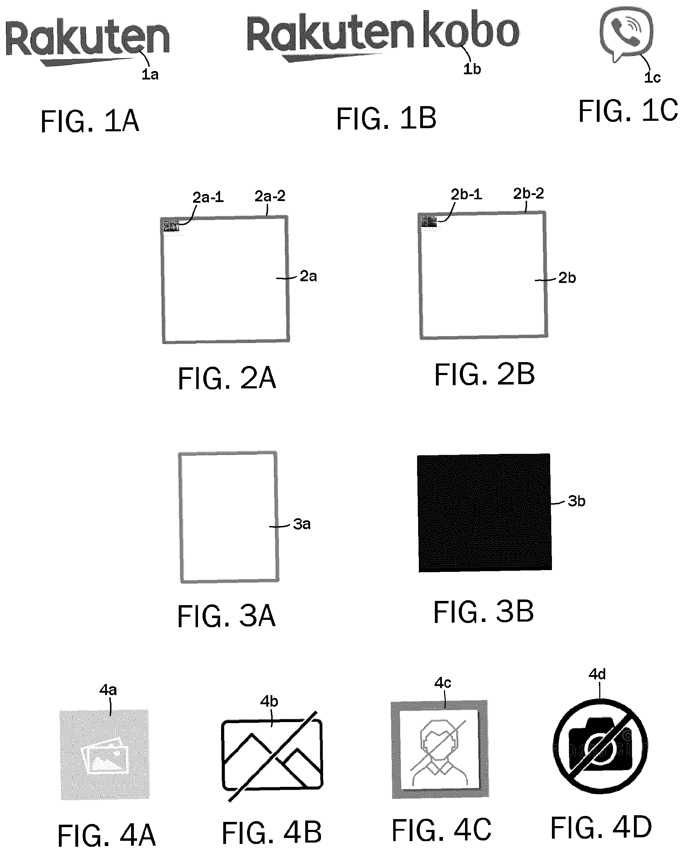

With reference to FIGS. 1A-1C, 2A-2B, 3A-3B, 4A-4D, and 5A-5G, various example placeholder images are presented. Specifically, FIGS. 1A-1C show placeholder images 1a-1c that are various corporate logos. FIG. 1A shows a placeholder image with the corporate logo 1a of the present assignee, "Rakuten". Another one may identify a service "kobo" in a logo 1b as shown in FIG. 1B. FIG. 1C shows a graphical logo 1c of a product or service (e.g., Viber) offered by the assignee without text included therein. FIGS. 2A-2B show placeholder images 2a-2b, respectively, of broken image representations of a smaller thumbnail 2a-1, 2b-1 of the image, shown relative to a hypothetical frames 2a-2, 2b-2 that are otherwise invisible against a white background. FIGS. 3A-3B show blank placeholder images 3a, 3b, respectively, which are single color blocks with otherwise no content therein. The boundary surrounding the white color block of the blank placeholder image 3a is presented only for the purposes of delineating the same. Such boundary would typically not be rendered by the browser.

FIGS. 4A-4D show yet another type of placeholder images 4a-4d, respectively, in which the lack of an image is clearly depicted and communicated through its iconography. The placeholder image 4a, for example, incorporates a representation of multiple generic images, whereas the placeholder image 4b shows a mountain landscape with a line across the same, indicating that an image is unavailable. Similarly, the placeholder image 4c depicts a generic portrait image with a line across, indicating that the image is unavailable. The placeholder image 4d includes an icon of a camera enclosed within a circle with a line across the circle to indicate that an image (as represented by the camera) is not available.

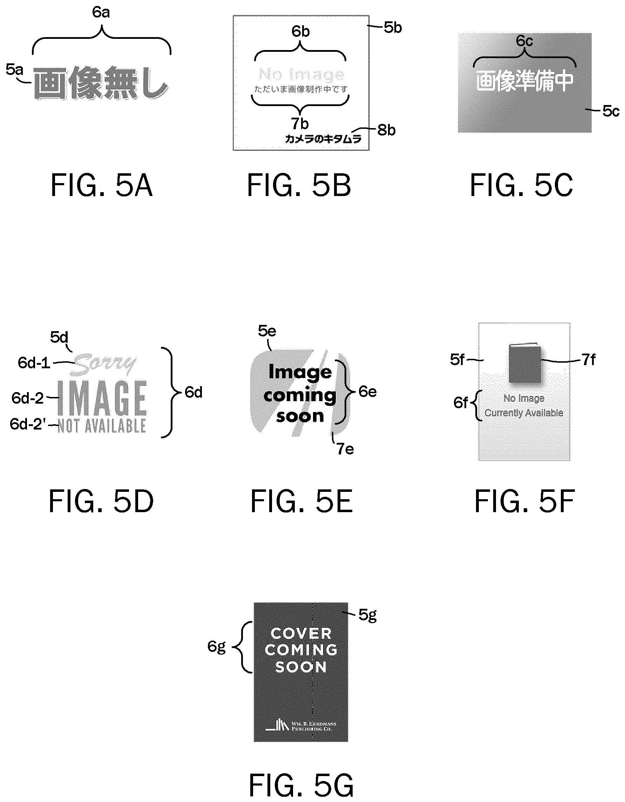

FIGS. 5A-5G illustrate variations of another type of placeholder image 5a-5g, respectively, which include text that indicates the image is a placeholder. FIG. 5A shows the placeholder image 5a with Japanese characters 6a that read "ga-zo nashi", which may be translated as "no image". FIG. 5B shows the placeholder image 5b with English characters 6b making up the words "No Image", followed by the Japanese characters 7b making up the phrase "tadaima ga-zo seisaku-chu desu" which may be translated as "at the moment, images are being produced". An identifier 8b for the website or the company responsible therefor may be included in a different portion of the placeholder image 5b. FIG. 5C shows the placeholder image 5c with the Japanese characters 6c making up the phrase "ga-zo jumbi-chu" which may be translated as "images are being prepared".

Such phrases indicating that the images are not available may be presented exclusively in English characters. FIG. 5D illustrates such a placeholder image 5d, which includes the phrase 6d "Sorry Image Not Available", with the word "sorry" 6d-1 rendered in a script font and "IMAGE NOT AVAILABLE" 6d-2 rendered in a sans-serif block font. This example illustrates that different parts of the phrase may be presented with a different graphical appearance, such as the word "IMAGE" 6d-2 being rendered in a larger font size than "NOT AVAILABLE" 6d-2'. FIG. 5E is another placeholder image 5e with the phrase "Image coming soon" presented as a set of characters 6e against a graphical background 7e. FIG. 5F shows the placeholder image 5f with the characters 6f "No Image Currently Available" underneath an icon 7f of a book. This example may be utilized in the context of a product listing of a book or other printed material as represented by the icon 7f, but where the actual image of the cover of the book, or otherwise showing the physical appearance of the product is unavailable. FIG. 5G shows the placeholder image 5g with the words 6g "Cover Coming Soon". This example illustrates that the specific wording may vary, and a placeholder image need not include the word "image". Here, the word "cover" is used to indicate that the image would otherwise be that of a cover of a book, and that a proper image is "coming soon".

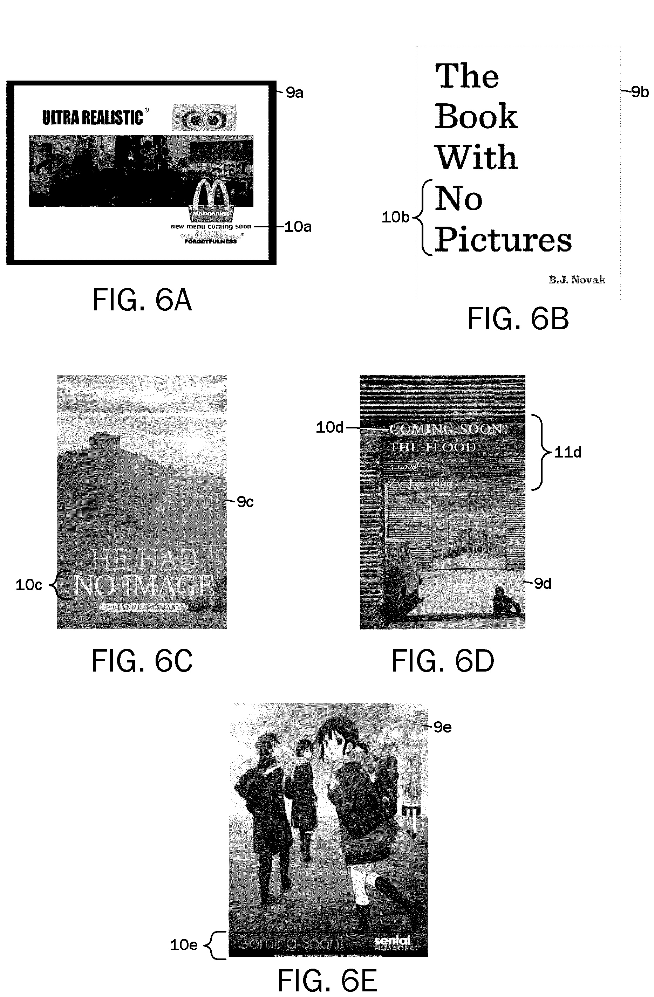

FIGS. 6A-6E are example images 9a-9e, respectively, that include text content that may be confused with a placeholder image. The image 9a shown in FIG. 6A, for example, includes the text 10a "new menu coming soon". The image 9b of FIG. 6B may be of a cover of a book with a title "The Book With No Pictures". The phrase 10b "No Pictures" may be confused with a typical placeholder text that may also indicate "No Picture" or some variant thereof. Similarly, the image 9c of FIG. 6C may be of a cover of a book having a title "He Had No Image", where the words 10c "No Image" may be confused with the same text that may be encountered in a placeholder image. The image 9d of FIG. 6D may be of a cover of a book that includes the text 11d "COMING SOON: THE FLOOD a novel Zvi Jagendorf', in which the phrase 10d "coming soon" may be confused with that of a placeholder image. FIG. 6E may be of a product that is accurately represented by the image 9e, but the words "Coming soon!" referring to the coming availability of the product, not that the image of the product is coming soon.

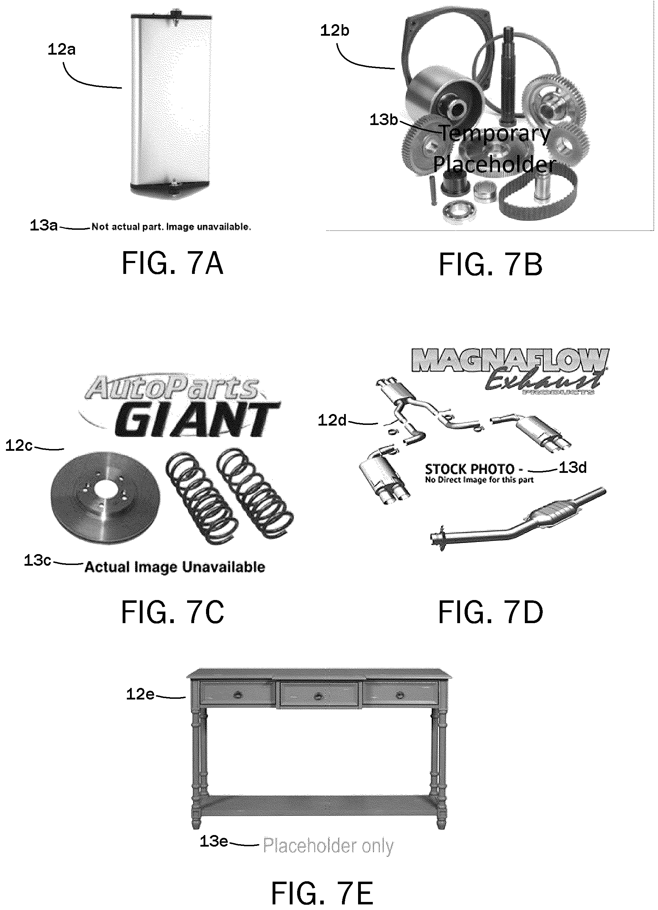

FIGS. 7A-7E are example images 12a-12e, respectively, of images that appear to be those for the specific products they depict. The image 12a in FIG. 7A shows a single component/product that may have different degrees of relevance to the product being sold. The relevance may be as broad as generally related by category or may be as specific as a competing product. However, the image 12a includes text 13a indicating that the image is "Not actual part". The image 12b in FIG. 7B shows multiple items including gears, belts, bearings, gaskets, and the like, and may be apparent that the image does not pertain to a specific product. There is also an overlay text 13b indicating that it is a "temporary placeholder". Likewise, the image 12c shown in FIG. 7C includes a corporate logo of the seller entity, along with imagery of a brake rotor and springs. In this case, the context of these depictions may suggest that the image pertains to no specific product, but also includes the text 13c "Actual Image Unavailable". The image 12d shown in FIG. 7D is similar to image 12c, in that there is a corporate logo of the seller entity, with images of automobile exhaust components. Again, the context of this image may suggest that it does not pertain to any specific product, and the text 13d solidifies this by stating "Stock Photo - No Direct Image for this part". However, due to the inclusion of related images within these images 12c, 12d, there is a potential for confusion and creating a mistaken impression that they pertain to a product. The image 12e shown in FIG. 7E is of a single item of furniture. There is a potential for confusing this image with that of the actual product as only a single item is shown. Nevertheless, the image also includes the text 13e "Placeholder Only".

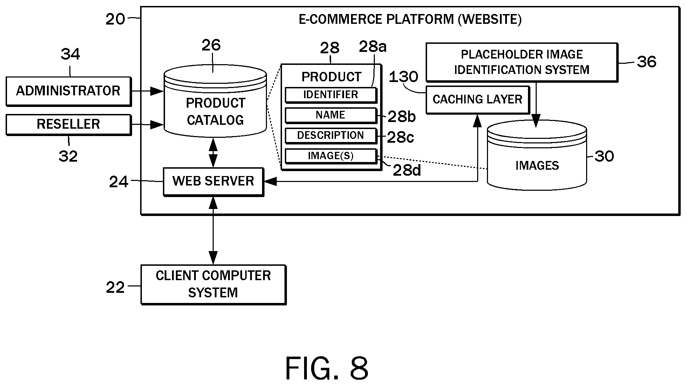

Referring to the block diagram of FIG. 8, an exemplary e-commerce platform 20 may include one or more server computer systems that are connected to the internet and communicate with a remote client computer system 22 to exchange data. One such computer system may be a web server 24 that receives various requests for information via a browser application running on the client computer system 22. The web server 24 may in response retrieve the requested information and transmits the same back to the client computer system 22 for rendering and display. In the case of the e-commerce platform 20, this may be product catalog information, of which there may be thousands to millions of individual records corresponding to the products offered for sale thereon.

This information may be stored in a product catalog database 26 comprised of one or more product records 28. In the illustrated example, the product record 28 may include an identifier field 28a, a name field 28b, a description field 28c, and one or more image fields 28d. Depending on the implementation, the data files representing the image(s) may be stored in the product catalog database 26 or in a separate image database 30. If the former, the image fields 28d may contain the image data, or if the latter, the image fields 28d may contain a reference to a record in the image database 30 that in turn stores the image data.

The depicted structural interrelationship of the product catalog database 26, the product records 28 contained therein, and the image database 30 is a greatly simplified representation of a conventional e-commerce platform implementation. It is presented as one possible example of structuring various underlying components that are in combination used to deliver the online shopping services to the customer, and how a placeholder image identification system 36 may fit within the overall context of the e-commerce platform 20. Likewise, the specific fields 28a-28d of the product record 28 are also exemplary only, and there may be additional or fewer fields than shown, depending on the implementation. While a record-field structure may imply a relational database defined in terms of tables with rows of each record and columns of each field, this is also by way of example only. The product catalog database 26 may be implemented in any number of ways known in the art, and the illustrated details are not intended to be the only way in which the e-commerce platform 20 may be configured.

There are numerous other components not specifically illustrated but are also a part of the e-commerce platform 20, but the implementation of such components is understood to be within the purview of those having ordinary skill in the art so additional details thereof will be omitted. Along these lines, the web server 24, the product catalog database 26, and the image database 30 may be implemented with one or more computer systems that each include a general-purpose processor that can execute pre-programmed instructions, one or more forms of memory for data and instruction storage, and communication modalities over which data may be exchanged among the computer systems. In order to provide services to a large number of users while ensuring high availability, the e-commerce platform 20 may be implemented using clusters of additional bare metal hardware, load balancers, additional network connectivity, and other redundancies, so the singular representations of the web server 24, product catalog database 26, and image database 30 are for illustrating functional elements and general divisions thereof, rather than discrete hardware and software units.

Although the primary use of the e-commerce platform 20 is for the customer to access the same and make purchases, another aspect is for sellers to offer products for sale. As referenced herein, a seller may refer to a third-party reseller 32 that is a separate business entity from that which operates the e-commerce platform 20, as well as the business entity or a close affiliate of the business entity that operates the e-commerce platform 20. To this end, the third-party reseller 32 may access an administrative interface to modify the product records 28 to list products being offered for sale. There may also be system administrators 34 that also modify the product records 28, as well as other features of the e-commerce platform 20. In the context of the present disclosure, placeholder images may be uploaded by such third-party resellers 32 and system administrators 34 if a product image is not otherwise available but one is needed to complete the product record 28 and begin sales. These placeholder images, which may take the form of the examples illustrated above, may then be saved onto the image database 30. The placeholder image identification system 36 is contemplated to flag such placeholder images for removal or for updating with actual product images.

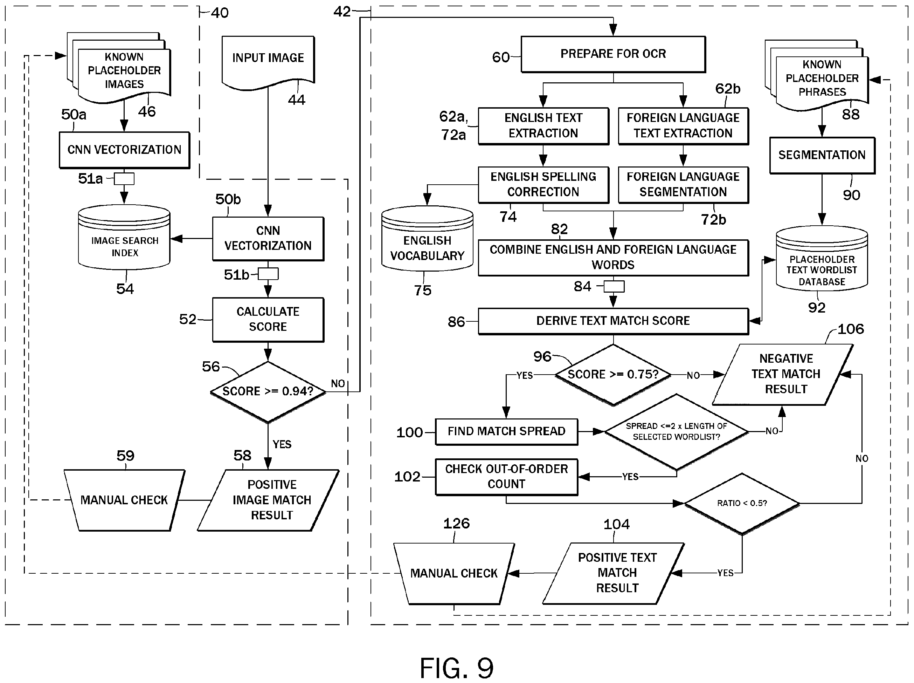

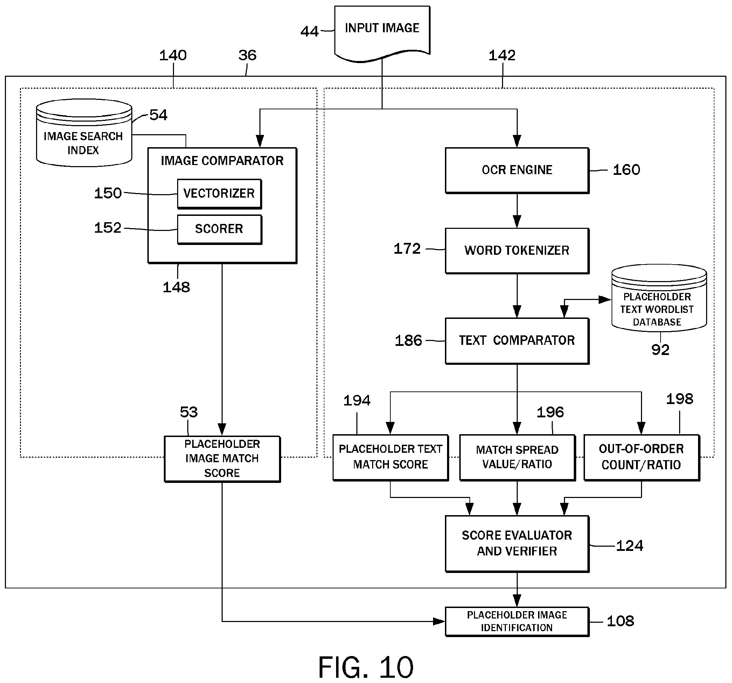

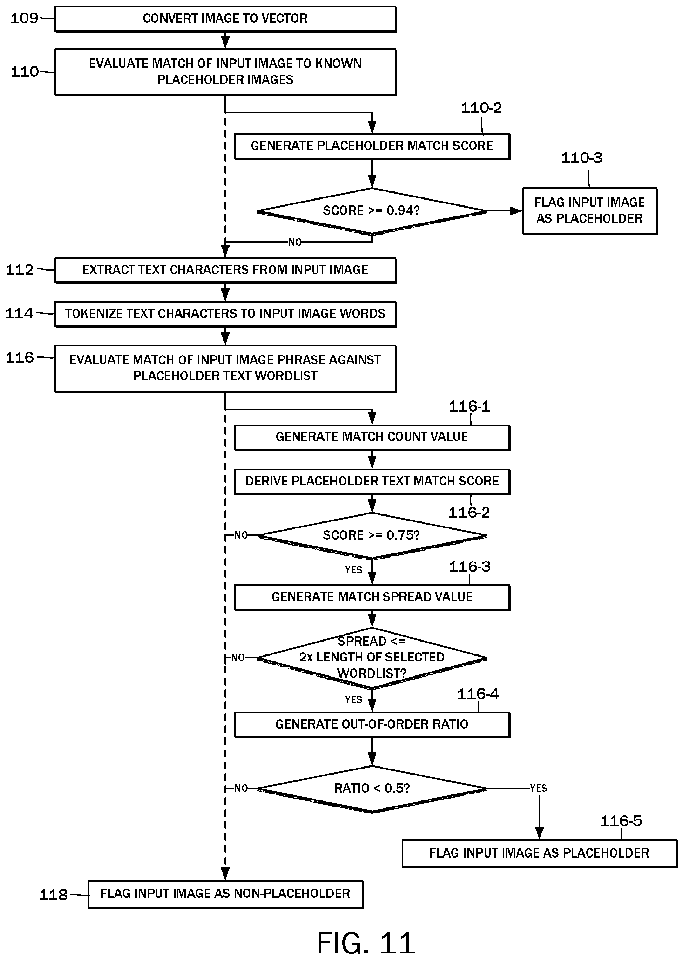

The flowchart of FIG. 9 illustrates one embodiment of a placeholder image detection process in accordance with the present disclosure. As broadly shown, the process may be segregated into two subparts: first, an image comparison part 40 and second, a text evaluation part 42. The image comparison part 40 generally involves matching an input image 44 with a pool of existing, known placeholder images, whereas the text evaluation part 42 involves extracting text from the input image, and determining whether the extracted text tends to indicate that the image from which such text was extracted is a placeholder image. The block diagram of FIG. 10 shows one possible implementation of the placeholder image identification system 36, which is likewise separable to image comparison components 140 and text evaluation components 142. Each of these subparts and components will be detailed in turn. The present disclosure additionally contemplates a method for identifying an input image as a placeholder, the steps of which are shown in the flowchart of FIG. 11. The steps of this method may correspond to specific aspects of the placeholder image detection process described in connection with the flowchart of FIG. 9, as well to specific components of the placeholder image identification system 36. This method may be tangibly embodied in an article of manufacture of a non-transitory program storage medium as one or more programs of instructions executable on a computing device such as those of the e-commerce platform 20.

In the placeholder image detection process, the image comparison part 40 generally involves matching an input image 44 with a pool of known placeholder images 46. This may correspond to a step 110 of evaluating a match of the input image 44 to a set of known placeholder images 46 in the method for identifying an input image shown in the flowchart of FIG. 11. A machine learning model may be utilized to convert both the input image 44 and the known placeholder images 46 into numerical vectors, and then a match may be determined based upon a similarity score. The block diagram of FIG. 10 shows the image comparison components 140 including an image comparator 148, which itself includes a vectorizer 150 and a scorer 152. The image comparator 148 is in communication with an image search index 54 that may contain the numerical vector values of the known placeholder images 46. It will be appreciated that the conversion of the known placeholder images 46 into numerical values occurs once, with such conversion being performed by a component other than the vectorizer 150 shown in FIG. 10. According to various embodiments of the present disclosure, the vectorizer 150 that is part of the overall placeholder image identification system 36 operates only on the input image 44.

Although the block diagram depicts the image search index 54 as being external to the image comparator 148, this is by way of example only and not of limitation because the image search index 54 may also be logically grouped within the image comparator 148 in certain implementations. As a general matter across other components and features of the placeholder image identification system 36 disclosed herein, the inclusion of one component within another broader component or component class/grouping is presented are exemplary only. Those having ordinary skill in the art will recognize that a given component may be separated from such component class or grouping, included as part of a different component class or grouping, and so on.

The known placeholder images 46 are understood to be those along the lines discussed above and presented in FIGS. 1A- 4D. Furthermore, to the extent that more unique placeholder images such as those shown in FIGS. 5A-5G are commonly found in the e-commerce platform 20, such images may also be identified as known and fed into the machine learning model for image-based comparison. As shown in the flowchart of FIG. 9, the known placeholder images 46 are subject to a vectorization process 50a, in which the data sets representing the images are converted to a set of known placeholder image vector values 51a.

An image is provided as an array of bitmap pixels values organized according to rows and columns, and the vectorization process is understood to convert such image to a set of values representing geometric primitives such as points, lines, curves, and polygons. A machine learning module may be utilized for the vectorization process 50a, with one possible implementation being convolutional neural networks (CNN). However, any other suitable machine learning model may be substituted without departing from the scope of the present disclosure. In the context of the placeholder image identification system 36, this vectorization process may be performed by the vectorizer 150. The known placeholder image vector values 51a of the known placeholder images 46 are stored into the image search index 54. The image search index 54 may be part of an elastic search module or may be a commercially available off-the-shelf system such as the Facebook AI Similarity Search (FAISS).

The image comparator 148 is receptive to the input image 44, and the image comparison part 40 of the placeholder image detection process includes a vectorization step 50b with the input image 44. This step may also be performed by the vectorizer 150 of the image comparator 148. An input image vector value 51b is generated as a result, and this value is queried from the image search index 54. In the context of the method for identifying an input image as a placeholder shown in the flowchart of FIG. 11, this corresponds to a step 109 of converting the input image 44 to input image vector values 51b.

The known placeholder image vector values 51a are compared against the input image vector value 51b, and a scorer 152 computes, in a step 52, a placeholder image match score 53. In one embodiment, cosine similarity may be utilized for the placeholder image match score 53. The method for identifying an input image as a placeholder may have a corresponding step 110-2 of generating the placeholder image match score 53 from a query to the image search index 54 with the input image vector values 51b.

If the computed placeholder image match score 53 is greater than or equal to 0.94 in accordance with a comparison step 56, the input image 44 is deemed to be a positive match to a known placeholder image 46 per step 58 and flagged as such accordingly. The specific value of 0.94 is presented for exemplary purposes only, and may differ depending on the implementation specifics. It is also possible for threshold match score 53 to be varied from one iteration to another as a parameter that is passed to the comparison function. It is to continue searching for better image matches after the first identified match. This flagging step may involve updating a related record field indicating that the corresponding image is a placeholder or any other implementation-specific step that generally indicates that a subject image is a placeholder. There may be a corresponding step 110-3 of flagging the input image 44 as a placeholder based upon the placeholder image match score 53.The general concept of utilizing machine learning to identify similar images is known in the art, so the foregoing image comparison part 40 may be implemented with any other suitable machine learning-based or other image comparison system. One such well-known classical image comparison system is Scale Invariant Feature Transform (SIFT).

According to one embodiment, after the input image 44 has been deemed to be a match per step 58, there may be a manual verification step 59 in which the input image 44 is confirmed as a placeholder. This feedback may then be used to further update the image search index 54 for subsequent iterations.

If the computed placeholder image match score 53 is evaluated as less than 0.94 in the comparison step 56, then the image comparison part 40 is deemed to have been inconclusive. The steps 110-2 and 110-3 of generating the placeholder image match score 53 and flagging the input image as a placeholder, respectively, are in a loop, in which the vector values of the input image 44 is compared against each of the vector values of the known placeholder images in the image search index 54 until there are one or more placeholder image match scores 53 above the threshold. If there are no known placeholder images 46 that match with the input image 44, it is deemed inconclusive and the process moves on to the text evaluation part 42. In the context of the placeholder image identification system 36, the text evaluation components 142 then process the input image 44 with a text extracting and text matching process as will be detailed more fully below.

One of the text evaluation components 142 is an optical character recognition engine 160 that scans the input image 44 and transforms it to machine-encoded text data. Referring to the flowchart of FIG. 9, the process continues with an OCR preparation step 60, which may include various OCR-pre-processing steps such as de-skew, binarization, line removal, and character isolation/segmentation. The OCR engine 160 also performs the subsequent English text extraction step 62a. In this regard, the method of identifying an input image as a placeholder may include a corresponding step 112 of extracting a set of text characters from the input image 44, and this takes place in response to no match being evaluated for the input image 44 during the image comparison part 40 as indicated above. The computational processes for character recognition are well known in the art, and a variety of approaches exist. The OCR engine 160 may thus implement any one of these approaches, and the embodiments of the present disclosure are not limited to any particular one.

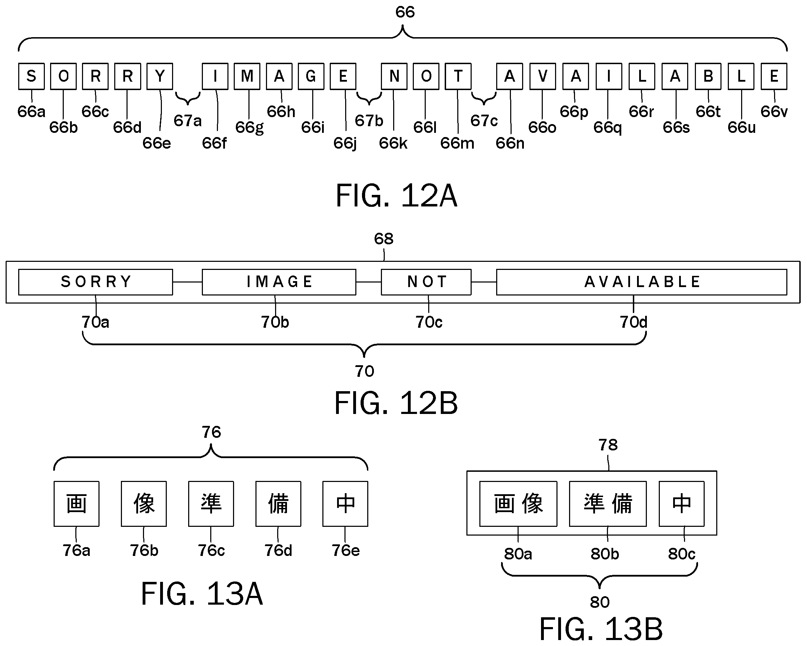

The optical character recognition process may include extracting a set of characters from the input image. FIG. 12A represents a set of individual characters 66a-66v extracted from the example placeholder image 5d depicted in FIG. 5D, "SORRY IMAGE NOT AVAILABLE". This string 66 of text characters constitutes a phrase 68, which may then be tokenized into constituent input image words 70 thereof. FIG. 12B illustrates the tokenization of the first, second third, fourth and fifth characters 66a-66e being tokenized as the word 70a "SORRY", the sixth, seventh, eighth, ninth, and tenth characters 66f-66j being tokenized as the word 70b "IMAGE", the eleventh, twelfth, and thirteenth characters 66k-66m being tokenized as the word 70c "NOT", and the fourteenth, fifteenth, sixteenth, seventeenth, eighteenth, nineteenth, twentieth, twenty-first, and twenty-second characters 66n-66v being tokenized as the word 70d "AVAILABLE".

The tokenization process 72a may be based on the white space 67 between one set of characters and another, and the placeholder image identification system 36 is understood to include a word tokenizer 172 to perform this process. The example shown in FIG. 12A depicts a first increased whitespace 67a between the fifth character 66e and the sixth character 66f, separating the first word 70a "SORRY" from the second word 70b "IMAGE". Similarly, a second whitespace 67b between the tenth character 66j and the eleventh character 66k separates the second word 70b "IMAGE" from the third word 70c "NOT". A third whitespace 67c between the thirteenth character 66m and the fourteenth character 66n separates the third word 70c "NOT" from the fourth worth 70d "AVAILABLE". Once tokenized, stop words may be removed. As a relatively trivial process, it is deemed to be a part of the English text extraction process 62a. The method for identifying the input image as a placeholder includes a corresponding step 114 of tokenizing the set of text characters into constituent input image words of one or more phrases.

Optionally, there may also be an English spelling correction step 74, as the text extraction process may introduce errors. The spelling correction may involve comparing each of the tokenized words 70a-70d to an English vocabulary list 75 and making appropriate corrections. Like optical character recognition, there are a variety of ways in which spell checking may be implemented, but because such variations are deemed to be within the purview of one having ordinary skill in the art, additional details thereof will be omitted.

Also contemplated is the detection of placeholder images provided in foreign languages, and so there may also be a parallel foreign language text extraction step 62b. Such foreign languages may include those that utilize the Latin alphabet (e.g., Spanish, French, etc.), those that utilize Chinese characters (Mandarin Chinese, Japanese, etc.), as well as any other character set (e.g., Hangul/Korean, Arabic, Thai, etc.). For purposes of illustrative example, the following description of the embodiments of the text evaluation part 42 and the text evaluation components 142 will be described with Japanese as the foreign language. It will be appreciated that any other foreign language may be substituted, with those having ordinary skill in the art being able to make the appropriate modifications to the text evaluation part 42 and the text evaluation components 142 to accommodate such alternative foreign languages.

The optical character recognition process includes a foreign language segmentation step 72b in which the detected characters in the foreign language are segmented into words along the same lines as the English language segmentation step or tokenization process 72a described above, and therefore also generally corresponds to the tokenization step 114 in the method shown in the flowchart of FIG. 11. This step may be performed by a suitably configured word tokenizer 172. FIG. 13A illustrates an example of the foreign language characters in the placeholder image 5c shown in FIG. 5C making up the phrase "ga-zo jum-bi-chu", or "images are being prepared". The OCR engine 160 is understood to recognize each of the first character "GA" 76a, the second character "ZO" 76b, the third character "JUM" 76c, the fourth character "BI" 76d, and the fifth character "CHU" 76e individually as continuous string of Japanese kanji characters 76, though not necessary as words making up the phrase. With additional reference to FIG. 13B, the text evaluation part 42 continues with a foreign or Japanese language segmentation process 72b that tokenizes the phrase 78 to its constituent first word "GA-ZO" 80a ("image"), second word "JUM-BI" 80b ("preparation"), and third word "chu" 80c ("middle"), which in combination can be translated to "images are in the middle of preparation" or "images are being prepared."

To the extent the input image 44 includes both English and Japanese/foreign language, the placeholder image detection process contemplates a step 82 of combining the English words 70 and the Japanese/foreign language input image words 80, as may be the case for the placeholder image 5b shown in FIG. 5B. Accordingly, all possible words that may tend to suggest that the input image 44 is a placeholder may be evaluated, regardless of language. The word tokenizer 172 may perform this step and output a set of input image words 84 comprised of the English words 70 and the Japanese/foreign language input image words 80 extracted from the input image 44. Again, the capability to process text in multiple languages is presented by way of example only, and there may be alternative embodiments in which text in only a single language is extracted. As a general matter, the input image words 84 are understood to refer to the text data extracted from the input image 44, regardless of the language(s) and characters thereof.

The text evaluation part 42 of the placeholder image detection next proceeds to a step 86 of deriving a text match score that may be performed by a text comparator 186. Generally, the input image words 84 are evaluated against known placeholder phrases 88 that may typically be included in placeholder images. For example, these include such phrases as "Sorry, image not available" in the placeholder image 5d, "image coming soon" as incorporated in the placeholder image 5e, and "no image currently available" as in the placeholder image 5f, along with foreign language/Japanese kanji character phrases such as "ga-zo nashi" as shown in the placeholder image 5a, "tadaima ga-zo seisaku-chu desu" as shown in the placeholder image 5b, and "ga-zo jumbi-chu" in the placeholder image 5c. These known placeholder phrases, which are made up of individual placeholder words such as "no", "image", "unavailable", "coming", "available" and the like, are separated into such words in a segmentation step 90 before being stored in a placeholder text wordlist database 92.

The input image 44, and specifically the input image words 84 therein are matched against these known placeholder phrases 88 to generate a placeholder text match score 194 that represents a quantification of the match. This may generally correspond to a step 116 of evaluating match of an input image phrase against the placeholder text wordlist in the method for identifying an input image as a placeholder shown in the flowchart of FIG. 11. By way of example to further illustrate the step of deriving a text match score, the extracted input image words may be "sorry this image is not yet available Rakuten shopping". A first one of the known placeholder phrases 88 may be "product image not available," and a second one of known placeholder phrases 88 may be "image is unavailable."

For a given phrase or input image words 84, the matching begins with a step of finding the match count value 194 and the spread of the matching phrase 196. These values may be generated by the text comparator 186, and the process may correspond to a step 116-1 of generating a match count value. The match count value may be generated for the one or more phrases. In one embodiment, this may be based upon a number of the input image words in a given one of the phrases that match known placeholder words in the placeholder text wordlist database 92. There may also be a correspondence to a step 116-3 of generating a match spread value between the first input image word matching one of the known placeholder image words, and the last input image word matching another known placeholder words, with the same known placeholder phrase (or known placeholder wordlist). As referenced herein, match count is the number of input image words 84 that are common with and found in one placeholder text wordlist in the database 92. The spread of the matching phrase is understood to be the length of words between the first matching word and the last matching word. The use of the score and spread are envisioned to be further rules that are applied to the input text to determine a match to one of the known placeholder phrases 88 that go beyond simple text matching. Continuing with the foregoing example of the first one of the known placeholder phrases being "product image not available", as between the first one of the known placeholder phrases and the input image words 84, the words "image", "not" and "available" are deemed matching, giving a match count value 196 of three. The spread of matching 198 is understood to be five, as there are a total of five words, e.g., "image is not yet available" between and including the first matching word of "image" and "available".

The known placeholder phrases 88 with the highest match count, e.g., the first one, is selected, and the placeholder text match score 194 is calculated. In one implementation, the placeholder text match score 194 is the match count divided by the length of the selected one of the known placeholder phrases 88 and may likewise be generated by the text comparator 186. Generally, it is to be understood that the placeholder text match score 194 is derived from a selected one of the input image words 84 and the phrase it defines collectively. This generally corresponds to a step 116-2 of deriving the placeholder text match score 194 in the method for identifying an input image as a placeholder shown in the flowchart of FIG. 11. With the above example, again, the match count is three, whereas the length of the selected one of the known placeholder phrases 88 is four: product(1), image(2) not(3) available(4). The placeholder text match score 194 is 3 / 4, or 0.75. According to one embodiment, the threshold score to determine a match may be 0.75 or greater, though this is by way of example only. The corollary is that a placeholder text match score 194 of less than 0.75 is deemed to be not a match. Any other suitable threshold number may be substituted without departing from the scope of the present dis closure. This evaluation against the predefined threshold may take place in a decision block 96.

After evaluating the computed placeholder text match score 194 in deriving the match score step 86 against the threshold, there may be an additional step 100 of finding a match spread. This generally corresponds to a step 116-3 of generating the match spread value in the method for identifying an input image as a placeholder shown in the flowchart of FIG. 11. In particular, the spread of matches is checked against the length of the selected one of the known placeholder phrases 88, and if the spread of matches is greater than or equal to two times the length of the known placeholder phrase, the input image words 84 are evaluated as not a match. Again, continuing with the above example, the spread of matches is five, e.g., image(1) is(2) not(3) yet(4) available(5), and the length of the selected one of the known placeholder phrases 88 is four: product(1), image(2) not(3) available(4). Twice the length of the selected one of the known placeholder phrases 88 is eight, and five (spread of matches) is less than eight. Accordingly, the match is deemed to be valid.

The foregoing evaluation or check against the length of the selected one of the known placeholder phrases 88 may be made after a tentative threshold comparison of the placeholder text match score 194, or at least after the placeholder text match score 194 has been generated. In which case, the specific action taken in response to a failed check may be to flag the input image 44 as a non-placeholder per step 118 in the method shown in the flowchart of FIG. 11. The order of operations is not intended to be limiting either way.

There may be another evaluation step 102 of checking the out-of-order ratio for the input image words 84 that have been match to the selected one of the known placeholder phrases 88. This generally corresponds to a step 116-4 of generating the out-of-order ratio in the method for identifying an input image as a placeholder shown in the flowchart of FIG. 11. The number of words that are out of order in a pair of phrases, e.g., the selected one of the known placeholder phrases 88 on one hand, and the input image words 84 on the other hand, defines the out-of-order count. As one example, the phrase [image not available] and [image available not], the out-of-order count is one, as the words "image" is in the same place in both phrases, but the next pair of words "available" and "not" are not in the same order. In another example, [image not available] and [available image not], the out-of-order count is two, because the pair of words "image" and "not" are not in the same order, and the pair of words "available" and "not" are not in the same order. The out-of-order ratio, in turn, is defined as the out-of-order count divided by the length of the compared phrases. If the out-of-order ratio is greater than or equal to 0.5, then the phrases are not deemed to be a match. In the first example above between [image not available] and [image available not], the out-of-order count is 1 and the length is three, giving an out of-order ratio of 0.333, meaning that two are considered a match. However, in the second example above between [image not available] and [available image not], the out-of-order count is two and the length is three, giving an out-of-order ratio of 0.6667, meaning that the two are not considered a match.

The foregoing evaluation or check of the out-of-order ratio may similarly be made after a tentative threshold comparison of the placeholder text match score 194, after evaluating against the match spread value 198 or at least after the placeholder text match score 194 has been generated. In which case, the specific action taken in response to a failed check may be to flag the input image 44 as a non-placeholder per step 118 in the method shown in the flowchart of FIG. 11. The order of operations is not intended to be limiting either way.

With the placeholder text match score 194 being evaluated as greater than or equal to 0.75, the spread of matches being evaluated as less than or equal to two times the length of the known placeholder phrase according to step 100, and the out-of-order ratio being less than or equal to 0.5, there is positive text match result 104. Otherwise, there is a negative text match result 106 as to that particular one of the known placeholder images 88. It is to be understood that so long as there is one positive match result, the input image 44 is deemed to be a placeholder. The text comparator 186 is understood to generate the placeholder text match score 194 from the evaluation of the input image words 84 against the placeholder text wordlist database 92, and a placeholder image identification is made based at least partially on the placeholder text match score 194. The placeholder image identification step may correspond to a flagging step 116-5 in the method for identifying an input image as a placeholder. According to one embodiment, the scoring and verifications may be performed by the text comparator 186. With reference again to the block diagram of FIG. 10, the various scores and metrics regarding the match between the input image words 84 and the known placeholder phrases 88 may be evaluated by the text comparator 186 to generate a placeholder image identification 108 that is either the positive text match result 104 or the negative text match result 106. Alternatively, however, these evaluations and the ultimate flagging of the input image 44 as a placeholder may be performed by the score evaluator and verifier 124. The step 116 of evaluating the match of the input image phrase against the placeholder text wordlist 88, including the constituent steps of generating the match count value 116-1, deriving the placeholder text match score 116-2, generating the match spread value 116-3, and generating the out-of order ratio 116-4, as well as step 116-5 of flagging the input image as a placeholder, step 118 of flagging the input image as a non-placeholder based on match spread value and out-of-order ratio are in a loop to compare the input image words 88 of the one input image 44 against each of the known placeholder phrases 88. The flagging steps 118, 116-5 are understood to be applicable only to a given one of the known placeholder phrases 88 to which it pertains, and already identified matches are not affected. The loop may be exited once a match is identified. As a general matter, the text evaluation part 42 is intended to identify one good match and that the subject input image 44 is a placeholder.

According to one embodiment, the positive text match result 104 may be confirmed in a manual verification step 126 and the input image 44 may then be added to the image search index 54 as a known placeholder image 46 following vectorization. There may be an additional duplicate identification procedure to ensure that multiple instances of the same placeholder image is not stored on the image search index 54. Alternatively, or additionally, the input image words 84 may be added to the placeholder text wordlist database 92 as a known one of the placeholder phrases 88 after the segmentation step 90, following the same manual verification step 126.

Referring again to the block diagram of FIG. 8, the e-commerce platform 20 may continuously utilize the placeholder image identification system 36 to flag images linked in the pages that are served by the web server 24. In order to reduce the number of unnecessary calls to the placeholder image identification system 36, there may be a caching layer 130. The URL (uniform resource locator) for a given image that is included in an output file corresponding to the served webpage and generated by a web application server is utilized, as well as the image itself to create a hash code, which in turn serves as the cache key. A typical record of the placeholder image identification 108 may include a key value such as "000019690543e1222adbc6cdfe46ef9f', with associated values such as:

```
        [{
          "values": {
                "confidenceScore":0.995,
                "value":"true"}
       }].
```

Thus, a cache entry for a given image record is understood to include the placeholder text match score 194 as well as a true/false flag indicating the status of whether the image to which the image record pertains is a placeholder.

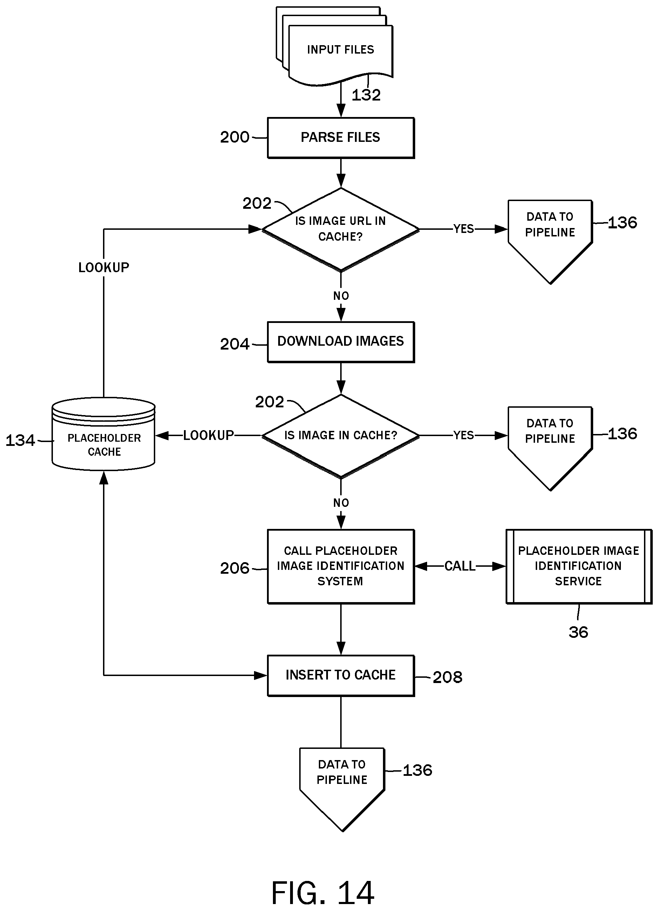

With additional reference to the flowchart of FIG. 14, one possible embodiment of the caching process includes a step 200 of parsing input files 132, which are output from the upstream pipeline. Next, the existence of a URL for the image referenced in the input files 132 is determined by performing a lookup of a placeholder cache 134. If there is a record as evaluated in a decision block 202 the corresponding placeholder image identification 108 for that image is retrieved from the placeholder cache 134 and passed to the next step of the data pipeline 136. If no entry in the placeholder cache 134 is found, the process continues with a step 204 of downloading the image referenced in the input files 132. Another lookup of a hash code for the downloaded image is performed on the placeholder cache 134, and if in a decision block 202 the existence of the image record is confirmed, then the process continues to the next step of the data pipeline 136.

If the image hash value is also not found in the placeholder cache 134, the process continues on to a step 206 of calling the placeholder image identification system 36. The hash code values of the image URL and the image, together with the resulting placeholder text match score 194 and placeholder image identification 108, are inserted into the placeholder cache 134 according to a step 208. Thereafter, the process continues to the next step of the data pipeline 136.

The placeholder image identification system 36 of the present disclosure has achieved effective performance levels, and have been evaluated for precision, recall, and F-1 score. As will be recognized, precision measures the correct percentage of predicted placeholders, and recall measures the percentage of all placeholder images detected. This figure is understood to be the complement of how many were missed. The F-1 score is understood to represent a combination of precision and recall. The following table lists the number of images processed, the number of predicted placeholder images, the number of correctly predicted placeholder images, and the number of incorrectly predicted placeholder images over multiple instances. Furthermore, the precision based upon such values are also presented.

**Table 1. Precision Results for Selected Executions**

| Processed | Predicted | Correct | Wrong | Precision |
|---|---|---|---|---|
| 53,394,435 | 16,592 | 16,506 | 86 | 99.5% |
| 70,830,473 | 23,270 | 23,156 | 114 | 99.5% |
| 25,375,154 | 14,122 | 14,066 | 56 | 99.6 |
| Average | | | | 99.5% |

Although a full view of recall performance is not available because a manual verification process will otherwise be necessary, a limited dataset with recall data is presented in the following table 2.

**Table 2. Precision, Recall and F1-Score Result for a Selected Execution**

| Processed | Predicted | Correct | Wrong | Missed | Precision | Recall | F-1 Score |
|---|---|---|---|---|---|---|---|
| 32,573 | 132 | 117 | 15 | 12 | 88.6% | 90.7% | 89.6% |

The particulars shown herein are by way of example and for purposes of illustrative discussion of the embodiments of the placeholder image detection system, placeholder image detection process, and a method for identifying an input image as a placeholder, and are presented in the cause of providing what is believed to be the most useful and readily understood description of the principles and conceptual aspects. In this regard, no attempt is made to show details with more particularity than is necessary, the description taken with the drawings making apparent to those skilled in the art how the several forms of the present disclosure may be embodied in practice.

## Claims

1. A computer-implemented method for identifying an input image (44) as a placeholder, the method comprising the steps of:
evaluating a match (110) of the input image (44) to a set of known placeholder images (46) based on conversion of the input image (44) and the placeholder images (46) into numerical vectors;
extracting, using an optical character recognition engine (160), a set of text characters from the input image (44) if it is determined that none of the placeholder images (46) in the set matches the input image (44);
tokenizing the set of text characters into constituent input image words (84) of one or more phrases;
generating a placeholder text match score (194) from the input image words (84) evaluated against a placeholder text wordlist of known placeholder phrases each including one or more known placeholder words; and
flagging the input image (44) as a placeholder image based at least partially upon the placeholder text match score (194);
wherein the step of generating the placeholder text match score includes:
generating match count values for the one or more phrases based upon a number of the input image words (84) in a given one of the phrases matching known placeholder words in the placeholder text wordlist;
generating match spread values of the one or more phrases between a first one of the input image words (84) in the given one of the phrases matching one of the known placeholder words and a last one of the input image words (84) in the given one of the phrases matching another one of the known placeholder words; and
deriving the placeholder text match score (194) for a selected one of the one or more phrases (88) as a function of a corresponding one of the match count values and a corresponding one of the match spread values.

2. The method of claim 1, further comprising:
flagging the input image (44) as a non-placeholder in response to an evaluation of the match spread value for the selected one of the one or more phrases against a predefined match spread threshold.

3. The method of claim 1, further comprising:
flagging the input image (44) as a non-placeholder in response to an evaluation of an out-of-order ratio for the input image words (84) against a predefined word order ratio threshold, the out-of-order ratio defining the number of pairs of words in the input image words (84) which are not in the same order as in the selected one of the one or more phrases (88), divided by the length of the compared phrases.

4. The method of claim 1, wherein the step of evaluating the match of the input image (44) to the set of known placeholder image includes:
converting the input image (44) to input image vector values;
generating a placeholder image match score from a query to a search index with the input image vector values, the search index being populated with known placeholder image vector values generated from the set of known placeholder images; and
flagging the input image (44) as a placeholder based upon the placeholder image match score.

5. The method of claim 4, wherein:
the converting of the input image (44) to the input image vector values is performed by a machine learning system; and
the known placeholder image vector values are generated by the machine learning system.

6. The method of claim 5, wherein the machine learning system is a convolutional neural network.

7. A system (36) for identifying a placeholder image in a catalog, the system comprising:
an image comparator (148) configured to receive an input image (44), and to evaluate a placeholder image match score of the input image(44) to a set of known placeholder images (46) based on conversion of the input image (44) and the placeholder images (46) into numerical vectors;
an optical character recognition engine (160) configured to receive the input image (44) and to output a set of text characters from the input image (44), if it is determined that none of the placeholder images (46) in the set matches the input image (44);
a word tokenizer (172) configured to tokenize the set of text characters into the input image words (84) of one or more phrases;
a placeholder text wordlist database (92) configured to store one or more known placeholder phrases each including one or more known placeholder words; and
a text comparator (186) connected to the placeholder text wordlist database (92) and configured to receive the input image words (84), to generate a placeholder text match score (194) from an evaluation of the input image words (84) against the placeholder text wordlist database (92), and to flag the input (44) image as a placeholder image based at least partially upon the placeholder text match score (194), wherein:
the text comparator (186) is configured to generate match count values for the one or more phrases based upon a number of input image words (84) in a given one of the phrases matching known placeholder words;
the text comparator (186) is configured to generate match spread values for the one or more phrases, a given one of the match spread values being based upon a first one of the input image words (84) in the given one of the phrases matching one of the known placeholder words and a last one of the input image words (84) in the given one of the phrases matching another one of the known placeholder words; and
the placeholder text match score (194) is derived from a selected one of the one or more phrases as a function of a corresponding one of the match count values and a corresponding one of the match spread values.

8. The system of claim 7, wherein the placeholder image identification is made based at least partially on an evaluation of the match spread value for the selected one of the one or more phrases against a predefined match spread threshold.

9. The system of claim 8, wherein the placeholder image identification is made based at least partially on an evaluation of an out-of-order ratio for the input image words (84) against a predefined word order ratio threshold, the out-of-order ratio defining the number of pairs of words in the input image words (84) which are not in the same order as in the selected one of the one or more phrases (88), divided by the length of the compared phrases.

10. The system of claim 7, wherein the optical character recognition engine outputs the set of text characters in one or more languages, the word tokenizer associating the set of text characters as being specific to a given one of the languages.

11. The system of claim 7, wherein the image comparator includes:
a vectorizer generating input image vector values from the input image (44);
a placeholder image index including one or more known placeholder image vector values generated from known placeholder images by the vectorizer; and
a scorer generating the placeholder image match score from a query to the placeholder image index with the input image vector values.

12. A non-transitory program storage medium readable by a computing device, the medium tangibly embodying one or more programs of instructions executable by the computing device to perform a method for identifying an input image (44) as a placeholder, the method comprising the steps of:
evaluating a match (110) of the input image (44) to a set of known placeholder images (46) based o n conversion of the input image (44) and the placeholder images (46) into numerical vectors;
extracting, using an optical character recognition engine (160), a set of text characters from the input image (44) if it is determined that none of the placeholder images (46) in the set matches the input image (44);
tokenizing the set of text characters into constituent input image words (84) of one or more phrases;
generating a placeholder text match score (194) from the input image words (84) evaluated against a placeholder text wordlist of known placeholder phrases each including one or more known placeholder words; and
flagging the input image (44) as a placeholder image based upon the placeholder text match score (194);
wherein the step of generating the placeholder text match score (194) embodied as the one or more programs of instructions includes:
generating match count values for the one or more phrases based upon a number of the input image words (84) in a given one of the phrases matching known placeholder words in the placeholder text wordlist;
generating match spread values of the one or more phrases between a first one of the input image words (84) in the given one of the phrases matching one of the known placeholder words and a last one of the input image words (84) in the given one of the phrases matching another one of the known placeholder words; and
deriving the placeholder text match score (194) for a selected one of the one or more phrases as a function of a corresponding one of the match count values and a corresponding one of the match spread values.

## Patentansprüche

1. Computerimplementiertes Verfahren zum Identifizieren eines Eingabebildes (44) als Platzhalter, wobei das Verfahren die folgenden Schritte umfasst:
Auswerten einer Übereinstimmung (110) des Eingabebildes (44) mit einem Satz bekannter Platzhalterbilder (46), basierend auf der Umwandlung des Eingabebildes (44) und der Platzhalterbilder (46) in numerische Vektoren;
Extrahieren, unter Verwendung einer OCR-Engine (160), eines Satzes von Textzeichen aus dem Eingabebild (44), wenn bestimmt wird, dass keines der Platzhalterbilder (46) in dem Satz mit dem Eingabebild (44) übereinstimmt;
Tokenisieren des Satzes von Textzeichen in konstituierende Eingabebildwörter (84) einer oder mehrerer Phrasen;
Erzeugen eines Platzhaltertext-Übereinstimmungswerts (194) aus den Eingabebildwörtern (84), ausgewertet gegenüber einer Platzhaltertext-Wortliste bekannter Platzhalterphrasen, die jeweils ein oder mehrere bekannte Platzhalterwörter einschließen; und
Markieren des Eingabebildes (44) als Platzhalterbild, basierend mindestens teilweise auf dem Platzhaltertext-Übereinstimmungswert (194);
wobei der Schritt des Erzeugens des Platzhaltertext-Übereinstimmungswerts einschließt:
Erzeugen von Übereinstimmungsanzahlwerten für die eine oder die mehreren Phrasen, basierend auf einer Anzahl der Eingabebildwörter (84) in einer gegebenen der Phrasen, die mit bekannten Platzhalterwörtern in der Platzhaltertext-Wortliste übereinstimmen;
Erzeugen von Übereinstimmungsverteilungswerten der einen oder der mehreren Phrasen zwischen einem ersten der Eingabebildwörter (84) in der gegebenen der Phrasen, das mit einem der bekannten Platzhalterwörter übereinstimmt, und einem letzten der Eingabebildwörter (84) in der gegebenen der Phrasen, das mit einem anderen der bekannten Platzhalterwörter übereinstimmt; und
Ableiten des Platzhaltertext-Übereinstimmungswerts (194) für eine ausgewählte der einen oder der mehreren Phrasen (88) als Funktion eines entsprechenden der Übereinstimmungsanzahlwerte und eines entsprechenden der Übereinstimmungsverteilungswerte.

2. Verfahren nach Anspruch 1, weiter umfassend:
Markieren des Eingabebildes (44) als Nicht-Platzhalter in Reaktion auf eine Auswertung des Übereinstimmungsverteilungswerts für die ausgewählte der einen oder der mehreren Phrasen gegenüber einem vordefinierten Übereinstimmungsverteilungsschwellenwert.

3. Verfahren nach Anspruch 1, weiter umfassend:
Markieren des Eingabebildes (44) als Nicht-Platzhalter in Reaktion auf eine Auswertung eines Außer-Reihenfolge-Verhältnisses für die Eingabebildwörter (84) gegenüber einem vordefinierten Wortreihenfolgeverhältnisschwellenwert, wobei das Außer-Reihenfolge-Verhältnis die Anzahl von Wortpaaren in den Eingabebildwörtern (84) definiert, die nicht in derselben Reihenfolge sind wie in der ausgewählten der einen oder der mehreren Phrasen (88), geteilt durch die Länge der verglichenen Phrasen.

4. Verfahren nach Anspruch 1, wobei der Schritt des Auswertens der Übereinstimmung des Eingabebildes (44) mit dem Satz bekannter Platzhalterbilder einschließt:
Umwandeln des Eingabebildes (44) in Eingabebildvektorwerte;
Erzeugen eines Platzhalterbild-Übereinstimmungswerts aus einer Abfrage an einen Suchindex mit den Eingabebildvektorwerten, wobei der Suchindex mit bekannten Platzhalterbildvektorwerten befüllt ist, die aus dem Satz bekannter Platzhalterbilder erzeugt wurden; und
Markieren des Eingabebildes (44) als Platzhalter, basierend auf dem Platzhalterbild-Übereinstimmungswert.

5. Verfahren nach Anspruch 4, wobei:
das Umwandeln des Eingabebildes (44) in die Eingabebildvektorwerte durch ein maschinelles Lernsystem durchgeführt wird; und
die bekannten Platzhalterbildvektorwerte durch das maschinelle Lernsystem erzeugt werden.

6. Verfahren nach Anspruch 5, wobei das maschinelle Lernsystem ein Convolutional Neural Network ist.

7. System (36) zum Identifizieren eines Platzhalterbildes in einem Katalog, wobei das System Folgendes umfasst:
einen Bildkomparator (148), ausgebildet zum Empfangen eines Eingabebildes (44) und zum Auswerten eines Platzhalterbild-Übereinstimmungswerts des Eingabebildes (44) mit einem Satz bekannter Platzhalterbilder (46), basierend auf Umwandlung des Eingabebildes (44) und der Platzhalterbilder (46) in numerische Vektoren;
eine OCR-Engine (160), ausgebildet zum Empfangen des Eingabebildes (44) und zum Ausgeben eines Satzes von Textzeichen aus dem Eingabebild (44), wenn bestimmt wird, dass keines der Platzhalterbilder (46) in dem Satz mit dem Eingabebild (44) übereinstimmt;
einen Wort-Tokenizer (172), ausgebildet zum Tokenisieren des Satzes von Textzeichen in die Eingabebildwörter (84) einer oder mehrerer Phrasen;
eine Platzhaltertext-Wortlistendatenbank (92), ausgebildet zum Speichern einer oder mehrerer bekannter Platzhalterphrasen, die jeweils ein oder mehrere bekannte Platzhalterwörter einschließen; und
einen Textkomparator (186), verbunden mit der Platzhaltertext-Wortlistendatenbank (92) und ausgebildet zum Empfangen der Eingabebildwörter (84), zum Erzeugen eines Platzhaltertext-Übereinstimmungswerts (194) aus einer Auswertung der Eingabebildwörter (84) gegenüber der Platzhaltertext-Wortlistendatenbank (92), und zum Markieren des Eingabebildes (44) als Platzhalterbild, basierend mindestens teilweise auf dem Platzhaltertext-Übereinstimmungswert (194); wobei:
der Textkomparator (186) ausgebildet ist, Übereinstimmungsanzahlwerte für die eine oder die mehreren Phrasen zu erzeugen, basierend auf einer Anzahl von Eingabebildwörtern (84) in einer gegebenen der Phrasen, die mit bekannten Platzhalterwörtern übereinstimmen;
der Textkomparator (186) ausgebildet ist, Übereinstimmungsverteilungswerte für die eine oder die mehreren Phrasen zu erzeugen, wobei ein gegebener der Übereinstimmungsverteilungswerte auf einem ersten der Eingabebildwörter (84) in der gegebenen der Phrasen basiert, das mit einem der bekannten Platzhalterwörter übereinstimmt, und auf einem letzten der Eingabebildwörter (84) in der gegebenen der Phrasen, das mit einem anderen der bekannten Platzhalterwörter übereinstimmt; und
der Platzhaltertext-Übereinstimmungswert (194) aus einer ausgewählten der einen oder der mehreren Phrasen als Funktion eines entsprechenden der Übereinstimmungsanzahlwerte und eines entsprechenden der Übereinstimmungsverteilungswerte abgeleitet wird.

8. System nach Anspruch 7, wobei die Platzhalterbildidentifikation, basierend mindestens teilweise auf einer Auswertung des Übereinstimmungsverteilungswerts für die ausgewählte der einen oder der mehreren Phrasen gegenüber einem vordefinierten Übereinstimmungsverteilungsschwellenwert, vorgenommen wird.

9. System nach Anspruch 8, wobei die Platzhalterbildidentifikation, basierend mindestens teilweise auf einer Auswertung eines Außer-Reihenfolge-Verhältnisses für die Eingabebildwörter (84) gegenüber einem vordefinierten Wortreihenfolgeverhältnisschwellenwert, vorgenommen wird, wobei das Außer-Reihenfolge-Verhältnis die Anzahl von Wortpaaren in den Eingabebildwörtern (84) definiert, die nicht in derselben Reihenfolge sind wie in der ausgewählten der einen oder der mehreren Phrasen (88), geteilt durch die Länge der verglichenen Phrasen.

10. System nach Anspruch 7, wobei die OCR-Engine den Satz von Textzeichen in einer oder mehreren Sprachen ausgibt, wobei der Wort-Tokenizer den Satz von Textzeichen als für eine gegebene der Sprachen spezifisch zuordnet.

11. System nach Anspruch 7, wobei der Bildkomparator Folgendes einschließt:
einen Vektorisierer, der Eingabebildvektorwerte aus dem Eingabebild (44) erzeugt;
einen Platzhalterbildindex, der einen oder mehrere bekannte Platzhalterbildvektorwerte einschließt, die von bekannten Platzhalterbildern durch den Vektorisierer erzeugt werden; und
einen Bewerter, der den Platzhalterbild-Übereinstimmungswert aus einer Abfrage an den Platzhalterbildindex mit den Eingabebildvektorwerten erzeugt.

12. Nichtflüchtiges Programmspeichermedium, lesbar durch eine Rechenvorrichtung, wobei das Medium greifbar ein oder mehrere Programme von Anweisungen verkörpert, die durch die Rechenvorrichtung ausführbar sind, um ein Verfahren zum Identifizieren eines Eingabebildes (44) als Platzhalter durchzuführen, wobei das Verfahren die folgenden Schritte umfasst:
Auswerten einer Übereinstimmung (110) des Eingabebildes (44) mit einem Satz bekannter Platzhalterbilder (46), basierend auf der Umwandlung des Eingabebildes (44) und der Platzhalterbilder (46) in numerische Vektoren;
Extrahieren, unter Verwendung einer OCR-Engine (160), eines Satzes von Textzeichen aus dem Eingabebild (44), wenn bestimmt wird, dass keines der Platzhalterbilder (46) in dem Satz mit dem Eingabebild (44) übereinstimmt;
Tokenisieren des Satzes von Textzeichen in konstituierende Eingabebildwörter (84) einer oder mehrerer Phrasen;
Erzeugen eines Platzhaltertext-Übereinstimmungswerts (194) aus den Eingabebildwörtern (84), ausgewertet gegenüber einer Platzhaltertext-Wortliste bekannter Platzhalterphrasen, die jeweils ein oder mehrere bekannte Platzhalterwörter einschließen; und
Markieren des Eingabebildes (44) als Platzhalterbild, basierend auf dem Platzhaltertext-Übereinstimmungswert (194);
wobei der Schritt des Erzeugens des Platzhaltertext-Übereinstimmungswerts (194), verkörpert als das eine oder die mehreren Programme von Anweisungen, umfasst:
Erzeugen von Übereinstimmungsanzahlwerten für die eine oder die mehreren Phrasen, basierend auf einer Anzahl der Eingabebildwörter (84) in einer gegebenen der Phrasen, die mit bekannten Platzhalterwörtern in der Platzhaltertext-Wortliste übereinstimmen;
Erzeugen von Übereinstimmungsverteilungswerten der einen oder der mehreren Phrasen zwischen einem ersten der Eingabebildwörter (84) in der gegebenen der Phrasen, das mit einem der bekannten Platzhalterwörter übereinstimmt, und einem letzten der Eingabebildwörter (84) in der gegebenen der Phrasen, das mit einem anderen der bekannten Platzhalterwörter übereinstimmt; und
Ableiten des Platzhaltertext-Übereinstimmungswerts (194) für eine ausgewählte der einen oder der mehreren Phrasen als Funktion eines entsprechenden der Übereinstimmungsanzahlwerte und eines entsprechenden der Übereinstimmungsverteilungswerte.

## Revendications

1. Procédé mis en œuvre par ordinateur pour identifier une image d'entrée (44) comme étant un détenteur de place, le procédé comprenant les étapes :
d'évaluation d'une correspondance (110) de l'image d'entrée (44) à un ensemble d'images (46) de détenteur de place connues sur la base d'une conversion de l'image d'entrée (44) et des images (46) de détenteur de place en vecteurs numériques ;
d'extraction, en utilisant un moteur (160) de reconnaissance optique de caractères, d'un ensemble de caractères de texte à partir de l'image d'entrée (44) s'il est déterminé qu'aucune des images (46) de détenteur de place dans l'ensemble ne correspond à l'image d'entrée (44) ;
de segmentation de l'ensemble de caractères de texte en mots (84) d'image d'entrée constitutifs d'une ou de plusieurs phrases ;
de génération d'un score (194) de correspondance de texte de détenteur de place à partir des mots (84) d'image d'entrée évalués par rapport à une liste de mots de texte de détenteur de place de phrases de détenteur de place connues incluant chacune un ou plusieurs mots de détenteur de place connus ; et
de signalisation de l'image d'entrée (44) comme étant une image de détenteur de place sur la base au moins partiellement du score (194) de correspondance de texte de détenteur de place ;
dans lequel l'étape de génération du score de correspondance de texte de détenteur de place inclut :
la génération de valeurs de comptage de correspondance pour la une ou les plusieurs phrases sur la base d'un nombre des mots (84) d'image d'entrée dans une phrase donnée des phrases correspondant à des mots de détenteur de place connus dans la liste de mots de texte de détenteur de place ;
la génération de valeurs d'étendue de correspondance de la une ou des plusieurs phrases entre un premier mot d'image d'entrée des mots (84) d'image d'entrée dans la phrase donnée des phrases correspondant à un des mots de détenteur de place connus et un dernier mot d'image d'entrée des mots (84) d'image d'entrée dans la phrase donnée des phrases correspondant à un autre mot de détenteur de place des mots de détenteur de place connus ; et
la dérivation du score (194) de correspondance de texte de détenteur de place pour une phrase sélectionnée de la une ou des plusieurs phrases (88) comme une fonction d'une valeur de comptage de correspondance correspondante des valeurs de comptage de correspondance et d'une valeur d'étendue de correspondance correspondante des valeurs d'étendue de correspondance.

2. Procédé selon la revendication 1, comprenant en outre :
la signalisation de l'image d'entrée (44) comme n'étant pas un détenteur de place en réponse à une évaluation de la valeur d'étendue de correspondance pour la phrase sélectionnée de la une ou des plusieurs phrases par rapport à un seuil d'étendue de correspondance prédéfini.

3. Procédé selon la revendication 1, comprenant en outre :
la signalisation de l'image d'entrée (44) comme n'étant pas un détenteur de place en réponse à une évaluation d'un rapport de désordre pour les mots (84) d'image d'entrée par rapport à un seuil de rapport d'ordre de mots prédéfini, le rapport de désordre définissant le nombre de paires de mots dans les mots (84) d'image d'entrée qui ne sont pas dans le même ordre que dans la phrase sélectionnée de la une ou des plusieurs phrases (88), divisé par la longueur des phrases comparées.

4. Procédé selon la revendication 1, dans lequel l'étape d'évaluation de la correspondance de l'image d'entrée (44) à l'ensemble d'images de détenteur de place connues inclut :
la conversion de l'image d'entrée (44) en valeurs de vecteur d'image d'entrée ;
la génération d'un score de correspondance d'image de détenteur de place à partir d'une requête à un index de recherche avec les valeurs de vecteur d'image d'entrée, l'index de recherche étant peuplé de valeurs de vecteur d'image de détenteur de place connues générées à partir de l'ensemble d'images de détenteur de place connues ; et
la signalisation de l'image d'entrée (44) comme étant un détenteur de place sur la base du score de correspondance d'image de détenteur de place.

5. Procédé selon la revendication 4, dans lequel :
la conversion de l'image d'entrée (44) en valeurs de vecteur d'image d'entrée est réalisée par un système d'apprentissage automatique ; et
les valeurs de vecteur d'image de détenteur de place connues sont générées par le système d'apprentissage automatique.

6. Procédé selon la revendication 5, dans lequel le système d'apprentissage automatique est un réseau neuronal convolutionnel.

7. Système (36) pour identifier une image de détenteur de place dans un catalogue, le système comprenant :
un comparateur d'images (148) configuré pour recevoir une image d'entrée (44), et pour évaluer un score de correspondance d'image de détenteur de place de l'image d'entrée (44) à un ensemble d'images (46) de détenteur de place connues sur la base d'une conversion de l'image d'entrée (44) et des images (46) de détenteur de place en vecteurs numériques ;
un moteur (160) de reconnaissance optique de caractères configuré pour recevoir l'image d'entrée (44) et pour produire en sortie un ensemble de caractères de texte à partir de l'image d'entrée (44), s'il est déterminé qu'aucune des images (46) de détenteur de place dans l'ensemble ne correspond à l'image d'entrée (44) ;
un segmenteur de mots (172) configuré pour segmenter l'ensemble de caractères de texte en mots (84) d'image d'entrée d'une ou de plusieurs phrases ;
une base de données (92) de liste de mots de texte de détenteur de place configurée pour stocker une ou plusieurs phrases de détenteur de place connues, chacune incluant un ou plusieurs mots de détenteur de place connus ; et
un comparateur de texte (186) relié à la base de données (92) de liste de mots de texte de détenteur de place et configuré pour recevoir les mots (84) d'image d'entrée, pour générer un score (194) de correspondance de texte de détenteur de place à partir d'une évaluation des mots (84) d'image d'entrée par rapport à la base de données (92) de liste de mots de texte de détenteur de place, et pour signaler l'image d'entrée (44) comme étant une image de détenteur de place sur la base au moins partiellement du score (194) de correspondance de texte de détenteur de place; dans lequel :
le comparateur de texte (186) est configuré pour générer des valeurs de comptage de correspondance pour la une ou les plusieurs phrases sur la base d'un nombre de mots (84) d'image d'entrée dans une phrase donnée des phrases correspondant à des mots de détenteur de place connus ;
le comparateur de texte (186) est configuré pour générer des valeurs d'étendue de correspondance pour la une ou les plusieurs phrases, une valeur d'étendue de correspondance donnée des valeurs d'étendue de correspondance étant basée sur un premier mot d'image d'entrée des mots (84) d'image d'entrée dans la phrase donnée des phrases correspondant à un des mots de détenteur de place connus et un dernier mot d'image d'entrée des mots (84) d'image d'entrée dans la phrase donnée des phrases correspondant à un autre mot de détenteur de place des mots de détenteur de place connus; et
le score (194) de correspondance de texte de détenteur de place est dérivé d'une phrase sélectionnée de la une ou des plusieurs phrases comme une fonction d'une valeur de comptage de correspondance correspondante des valeurs de comptage de correspondance et d'une valeur d'étendue de correspondance correspondante des valeurs d'étendue de correspondance.

8. Système selon la revendication 7, dans lequel l'identification d'image de détenteur de place est effectuée sur la base au moins partiellement d'une évaluation de la valeur d'étendue de correspondance pour la phrase sélectionnée de la une ou des plusieurs phrases par rapport à un seuil d'étendue de correspondance prédéfini.

9. Système selon la revendication 8, dans lequel l'identification d'image de détenteur de place est effectuée sur la base au moins partiellement d'une évaluation d'un rapport de désordre pour les mots (84) d'image d'entrée par rapport à un seuil de rapport d'ordre de mots prédéfini, le rapport de désordre définissant le nombre de paires de mots dans les mots (84) d'image d'entrée qui ne sont pas dans le même ordre que dans la phrase sélectionnée de la une ou des plusieurs phrases (88), divisé par la longueur des phrases comparées.

10. Système selon la revendication 7, dans lequel le moteur de reconnaissance optique de caractères produit en sortie l'ensemble de caractères de texte dans une ou plusieurs langues, le segmenteur de mots associant l'ensemble de caractères de texte comme étant spécifique à une langue donnée des langues.

11. Système selon la revendication 7, dans lequel le comparateur d'images inclut :
un vectoriseur générant des valeurs de vecteur d'image d'entrée à partir de l'image d'entrée (44) ;
un index d'image de détenteur de place incluant une ou plusieurs valeurs de vecteur d'image de détenteur de place connues générées à partir d'images de détenteur de place connues par le vectoriseur ; et
un outil de calcul de score générant le score de correspondance d'image de détenteur de place à partir d'une requête à l'index d'image de détenteur de place avec les valeurs de vecteur d'image d'entrée.

12. Support de stockage de programme non transitoire lisible par un dispositif informatique, le support matérialisant de manière tangible un ou plusieurs programmes d'instructions exécutables par le dispositif informatique pour réaliser un procédé pour identifier une image d'entrée (44) comme étant un détenteur de place, le procédé comprenant les étapes :
d'évaluation d'une correspondance (110) de l'image d'entrée (44) à un ensemble d'images (46) de détenteur de place connues sur la base d'une conversion de l'image d'entrée (44) et des images (46) de détenteur de place en vecteurs numériques ;
d'extraction, en utilisant un moteur (160) de reconnaissance optique de caractères, d'un ensemble de caractères de texte à partir de l'image d'entrée (44) s'il est déterminé qu'aucune des images (46) de détenteur de place dans l'ensemble ne correspond à l'image d'entrée (44) ;
de segmentation de l'ensemble de caractères de texte en mots (84) d'image d'entrée constitutifs d'une ou de plusieurs phrases ;
de génération d'un score (194) de correspondance de texte de détenteur de place à partir des mots (84) d'image d'entrée évalués par rapport à une liste de mots de texte de détenteur de place de phrases de détenteur de place connues incluant chacune un ou plusieurs mots de détenteur de place connus ; et
de signalisation de l'image d'entrée (44) comme étant une image de détenteur de place sur la base du score (194) de correspondance de texte de détenteur de place ;
dans lequel l'étape de génération du score (194) de correspondance de texte de détenteur de place matérialisé sous la forme du un ou des plusieurs programmes d'instructions inclut :
la génération de valeurs de comptage de correspondance pour la une ou les plusieurs phrases sur la base d'un nombre des mots (84) d'image d'entrée dans une phrase donnée des phrases correspondant à des mots de détenteur de place connus dans la liste de mots de texte de détenteur de place ;
la génération de valeurs d'étendue de correspondance de la une ou des plusieurs phrases entre un premier mot d'image d'entrée des mots (84) d'image d'entrée dans la phrase donnée des phrases correspondant à un des mots de détenteur de place connus et un dernier mot d'image d'entrée des mots (84) d'image d'entrée dans la phrase donnée des phrases correspondant à un autre mot de détenteur de place des mots de détenteur de place connus ; et
la dérivation du score (194) de correspondance de texte de détenteur de place pour une phrase sélectionnée de la une ou des plusieurs phrases comme une fonction d'une valeur de comptage de correspondance correspondante des valeurs de comptage de correspondance et d'une valeur d'étendue de correspondance correspondante des valeurs d'étendue de correspondance.
